# EUROPÄISCHE PATENTSCHRIFT

(11) **EP 2 042 956 B1**
(45) Veröffentlichungstag und Bekanntmachung des Hinweises auf die Patenterteilung: **27.02.2019**
(21) Anmeldenummer: 08016419.7
(22) Anmeldetag: 18.09.2008
(51) Int. Cl.: G05B 19/418

(54) **Schnittstelle zwischen einem Fertigungsmanagementsystem und einem Automatisierungssystem**
Interface between a production management system and an automation system
Interface entre un système de gestion de la fabrication et un système d'automatisation

(30) Priorität: 26.09.2007 DE 102007045926
(43) Veröffentlichungstag der Anmeldung: 01.04.2009
(73) Patentinhaber: Robert Bosch GmbH, 70469 Stuttgart (DE)
(72) Erfinder: Landgraf, Günther, 97753 Karlstadt (DE); Muenzberg, Mathias, 97072 Würzburg (DE)
(74) Vertreter: Schuhbießer, Irmgard Gertrud

(56) Entgegenhaltungen:
- EP-A2- 1 746 799
- WO-A1-01/50099
- US-A1- 2004 158 474
- US-A1- 2005 267 882
- US-A1- 2007 179 650

## Beschreibung

Die Erfindung betrifft eine Schnittstelle zwischen einem Fertigungsmanagementsystem (MES - Manufacturing Execution System) und einem Automatisierungssystem sowie ein Verfahren zum Betrieb einer solchen Schnittstelle gemäß der Ansprüche 1 und Anspruch 15.

Dynamic Data Exchange (DDE) war die prädestinierte Schnittstelle für den Austausch von Informationen zwischen Software-Applikationen. Nun hat sich OPC als standardisierte Schnittstelle für den Austausch von Prozessdaten in der PC-basierten Automatisierungstechnik durchgesetzt. OPC stellt eine Anwendung der Microsoft DCOM-Technologie (Distributed Component Object Model) dar. Gegenüber der Schnittstelle DDE zeichnet sich der OPC-basierte Datenaustausch durch eine bedeutend höhere Performance aus. Stattet man ein Automatisierungssystem mit einem OPC-Server aus, so kann hierdurch eine sichere Kommunikation mit übergeordneten Kontrollsystemen erreicht werden. Da bei vielen Automatisierungssystemkomponenten keine standardisierte Kommunikationsschnittstelle vorhanden ist, besteht bei der Anbindung dieser Kommunikationsschnittstelle an ein MES von Seiten des Anwenders ein hoher Programmieraufwand dadurch, dass die von der Automatisierungssystemkomponente bereitgestellten Kommandos zur Parametrierung der Komponente in ein für das MES lesbares und schreibbares Format umgesetzt werden müssen. Alternativ könnte der Lieferant des MES eine komponentenspezifische Anbindung gleich mitliefern. Dann ist das MES - System jedoch unflexibel und die Automatisierungskomponenten sind nur mit hohem Programmieraufwand gegen Komponenten anderer Hersteller austauschbar. Auch für den Hersteller des Fertigungsmanagementsystems ist der Aufwand höher, da er für unterschiedliche Automatisierungskomponenten seinen Kunden unterschiedliche Schnittstellenmodule liefern muss.

Die Gebrauchsmusterschrift DE 202 80 020 U1 offenbart ein Schweißgerät mit OPC-Server mit einem Datenverarbeitungsprogramm zur Umwandlung von internen Daten des Schweißgerätes von einem internen Datenformat in das OPC-Standardformat und/oder umgekehrt. Der OPC-Server umfasst Mess-/Ausgabemittel zur Erfassung interner Daten, wobei der OPC-Server mit einer OPC-Schnittstelle in Verbindung steht und wobei die OPC-Schnittstelle an einem Gehäuse des Schweißgerätes angeordnet ist. Das Schweißgerät kann sehr einfach gegen Schweißgeräte anderer Hersteller, welche ebenfalls das OPC-Standardformat verwenden, ausgetauscht werden. Der OPC-Server kann mittels der Mess-/Ausgabemittel interne Betriebszustände des Schweißgerätes erfassen und mittels der OPC -Schnittstelle OPC konform aufbereiten und anschließend weiterleiten, benötigt jedoch das übergeordnete System (z.B. MES) zur Auswertung der Daten.

US 2007/0179650 A1 zeigt ein Verfahren und ein System zur Analyse von Standardwerkzeugnachrichten in einer Produktionsumgebung.

US 2005/0267882 A1 zeigt ein Modell zur Kommunikation zwischen einer Produktionsebene und einer Unternehmens bzw. Steuerungsebene.

Die Aufgabe der Erfindung besteht darin eine Vorrichtung zu schaffen, welche die zuvor genannten Probleme des Standes der Technik löst.

Die Aufgabe wird gelöst mittels einer Vorrichtung mit einer ersten Schnittstelle zur Anbindung eines übergeordneten Systems, insbesondere eines Fertigungsmanagementsystems, an die Vorrichtung mittels eines ersten Datenprotokolls und mit einer zweiten Schnittstelle zur Anbindung einer Automatisierungssystemkomponente an die Vorrichtung mittels eines zweiten Datenprotokolls, wobei jeweils ein Datenerfassungsmittel und ein Datenübertragungsmittel umfasst ist, wobei beide Mittel jeweils mit zumindest einer der Schnittstellen verbunden sind und wobei beide Mittel untereinander derart verbunden sind, dass eine Kommunikation zwischen den an den Schnittstellen anschließbaren Systemen realisierbar ist, wobei ein Datenkonvertierungsmittel umfasst ist, welches die Protokolle beider Schnittstellen ineinander überführt wie in Anspruch 1 beschrieben, wobei weiter von der Vorrichtung umfasst sind:
a) ein in die Vorrichtung integrierter Langzeitdatenspeicher für die Speicherung von mittels des Datenerfassungsmittels erfassten Rohdaten, insbesondere von Betriebsparametern einer an die Vorrichtung anschließbaren Automatisierungssystemkomponente, wobei die Vorrichtung selbsttätig Betriebsparameter einer an die Vorrichtung anschließbaren Automatisierungssystemkomponente mittels der zweiten Schnittstelle in den Langzeitdatenspeicher einliest;
b) eine in die Vorrichtung integrierte Datenanalyseeinheit zur Analyse der im Langzeitdatenspeicher abgelegten Rohdaten, wobei selbsttätig die Daten aus dem Langzeitdatenspeicher ausgelesen werden und die Analyse der Daten nach Maßgabe einer austauschbaren Datenanalysevorschrift mittels der Datenanalyseeinheit erfolgt und selbsttätig die Aufbereitung des Analyseergebnisses für die Weiterverarbeitung des Ergebnisses erfolgt;
c) ein in die Vorrichtung integriertes Konfigurationsmittel zur Konfiguration der Datenanalyseeinheit bezüglich der durchzuführenden Analyse und zur Konfiguration der Vorrichtung bezüglich der Art und Weise der Weiterverarbeitung des Ergebnisses der Datenanalyse mittels einer der Schnittstellen oder mittels des Langzeitdatenspeichers, wie in Anspruch 1 beschrieben.

Das übergeordnete System könnte beispielsweise eine der folgenden Funktionen umfassen oder alle Funktionen oder Teile der folgenden Funktionen kombinieren, beispielsweise als MES:
a) Fertigungsüberwachung, beispielsweise in Form eines Leitstandes;
b) Wartungssystem mit Trendanalysefunktion (Remote Condition Monitoring);
c) Qualitätsüberwachungssystem;
d) Bestandsverwaltungssystem

Der Vorteil der erfindungsgemäßen Lösung gegenüber dem einleitend erwähnten Stand der Technik liegt darin, dass mittels des Langzeitdatenspeichers Änderungen von Betriebsparametern einer an die Vorrichtung angeschlossenen Automatisierungskomponente über einen längeren Zeitraum mitprotokolliert werden können. Für Langzeitaufzeichnungen im Sinne der Erfindung können Puffer für Datenmengen bis zu 10 Terabyte vorgesehen werden. Mittels der Datenanalyseeinheit ist es während oder nach der Pufferung möglich die mittels der zweiten Schnittstelle mitprotokollierten Daten zu untersuchen und daraus Erkenntnisse bezüglich des Zustands der Automatisierungskomponente abzuleiten. Die vom Datenanalysemittel erzeugten Ergebnisse können anschließend sowohl im Langzeitspeicher gespeichert oder zwischengespeichert werden, als auch mittels einer der Schnittstellen an ein angeschlossenes System weitergeleitet werden, nachdem sie entsprechend des zu verwendenden Datenprotokolls aufbereitet wurden. Hierdurch wird ein Fertigungsmanagementsystem, welches üblicherweise die Datenaktualisierung übernimmt, bezüglich der erforderlichen Rechenleistung entlastet.

Die Vorrichtung dient somit einerseits als Schnittstelle zum Austausch von Daten zwischen zwei Systemen, welche unterschiedliche Kommunikationsprotokolle verwenden und hat andererseits vorrangig noch die Funktion einer Kontrollinstanz, welche an die Vorrichtung angeschlossene Komponenten, wie speicherprogrammierbare Steuerungen (SPS), Numerische Steuerungen (NC), Antriebsregler und Motoren, bezüglich Ihres Betriebszustandes überwacht, deren Betriebszustand analysiert, und dem übergeordneten System diesen Betriebszustand mitteilt, gegebenenfalls zusammen mit dem Analyseergebnis. Außerdem können mittels der zweiten Schnittstelle Betriebsparameter einer an die Vorrichtung angeschlossenen Automatisierungssystemkomponente im laufenden Betrieb verändert und damit zur Laufzeit ("on the fly") korrigiert werden.

Der Langzeitdatenspeicher könnte außerdem noch als Datenpuffer für die Datenanalyseeinheit dienen, wobei Analyseergebnisse oder Analysezwischenergebnisse im Langzeitdatenspeicher abgespeichert und mittels der Datenanalyseeinheit aus dem Langzeitdatenspeicher erneut ausgelesen und weiterverarbeitet werden können.

Die Daten aus dem Langzeitdatenspeicher können mittels eines an die erste Schnittstelle anschließbaren übergeordneten Systems von diesem übergeordneten System abgerufen werden, ebenso wäre es denkbar die Datenspeicherung von einer an die zweite Schnittstelle angeschlossenen Automatisierungskomponente abrufbar zu gestalten.

Mit der erfindungsgemäßen Vorrichtung ist eine maschinennahe Langzeitaufzeichnung von Prozess- und Maschinenzustandsdaten möglich. Aufgrund der realisierbaren Langzeitaufzeichnung können Daten zur genauen Analyse der Ursache von Problemen an Maschinen, zur Optimierung von Produkten (z.B. Komponenten einer Werkzeugmaschine) und zur Optimierung von Prozessabläufen verfügbar gemacht werden. Auf Grund der in die erfindungsgemäße Vorrichtung integrierbaren Auswertealgorithmen kann der Anwender sich auf die Optimierung und Analyse des Maschinenverhaltens und/oder des Produktionsprozesses konzentrieren und muss sich keine Gedanken darüber machen, wie er die Datenanbindung zur Maschine und zu übergeordneten Systemen herstellt. Durch die maschinennahe Vorverarbeitung werden die an übergeordnete Systeme zu übertragenden Datenmengen reduziert, wobei durch den Datenpuffer/-speicher trotzdem die Möglichkeit besteht bei Bedarf von übergeordneten Systemen auf die ungefilterten Daten bzw. "Rohdaten"-Historie der Maschine für Analysezwecke zurück zu greifen. Durch die Kombination von standardisierter Kommunikation, Datenspeicher und aufgabenspezifischer Integration von Vorverarbeitungsalgorithmen besteht ein Potenzial für die Optimierung und Analyse des Maschinenverhaltens und/oder des Produktionsprozesses.

Wie beschrieben umfasst die erfindungsgemäße Vorrichtung eine Datenanalyseeinheit mit zumindest einer austauschbaren Funktionseinheit, mittels derer die Funktion der Datenanalyseeinheit definierbar und jederzeit änderbar ist und welche mittels des Konfigurationsmittels verwaltet wird. Mittels des Konfigurationsmittels kann die Vorrichtung somit die Funktion des Datenanalysemittels durch Austausch der Analysealgorithmen für die in den Langzeitspeicher eingelesenen Betriebsparameter anwendungsspezifisch und fallspezifisch abändern. Vorzugsweise ist die Funktion mittels eines Hardware- und/oder Software Plug-in (austauschbare Hardware und/oder Softwarekomponente) realisiert. Das Hardware Plug-in könnte beispielsweise mittels eines austauschbaren Speichermediums realisiert sein, welches aufgrund des auf ihm gespeicherten Anwenderprogramms die Funktion der Datenanalyseeinheit definiert und mittels des Konfigurationsmittels aktiviert werden kann. Eine andere Möglichkeit wäre es Softwaremodule, beispielsweise mittels eines von der Vorrichtung umfassten Speichers, bereitzuhalten oder einzulesen. Sowohl für das Hardware Plug-in als auch für das Software Plug-in könnten vorhandene oder spezielle Schnittstellen vorgesehen werden.

Das Prinzip von mittels eines Frameworks oder eines Konfigurationsmittels austauschbaren Auswertealgorithmen bietet die Möglichkeit die erfindungsgemäße Vorrichtung für verschiedenste Aufgabenstellungen zu verwenden und die Auswertungen maschinennah und maschinenspezifisch durchzuführen, beispielsweise indem die Auswertealgorithmen auf die konkrete Maschine und deren Problemstellung abgestimmt werden.

Vorteilhafterweise hat die Datenanalyseeinheit unmittelbaren Zugriff auf das Datenerfassungsmittel und/oder das Datenübertragungsmittel und/oder das Datenerfassungsmittel unmittelbaren Zugriff auf das Datenübertragungsmittel und die Datenanalyseeinheit. Somit könnte der Datenempfang und die Analyse in Echtzeit unter Umgehung des Datenpuffers erfolgen. Auch wäre es sinnvoll, wenn das Datenübertragungsmittel zusätzlich unmittelbaren Zugriff auf den Langzeitdatenspeicher hat, so dass die Daten ohne Zwischenschritte vom Speicher oder Datenerfassungsmittel ausgelesen und für die Weiterleitung aufbereitet werden können.

Besonders bevorzugt ist die Vorrichtung mittels des Konfigurationsmittels selbst konfigurierbar, insbesondere jedoch sind folgende Aspekte konfigurierbar:
a) der Schreibvorgang und/oder die Datenkonvertierung für Daten, welche mittels einer der Schnittstellen zu senden sind;
b) der Lesevorgang und/oder die Datenkonvertierung für Daten, welche von einer der Schnittstellen zu empfangen sind;
c) die Initialisierung der Vorrichtung selbst durch Festlegung beispielsweise des Funktionsumfangs des Analysemittels und der Ablauf von Messvorgängen an vorkonfigurierbaren Messpunkten einer mittels der zweiten Schnittstelle angeschlossenen Automatisierungskomponente.
d) der Verarbeitungsvorgang für die interne Datenverarbeitung mittels der erfindungsgemäßen Vorrichtung.
e) externe Ereignisse, welche an einer Automatisierungskomponente auftreten und das selbsttätige Einlesen von Daten in den Langzeitdatenspeicher bewirken.

Vorteilhafterweise ist eine Datenschutzvorrichtung umfasst, mittels welcher eine Sicherung der zu übertragenden Daten mittels eines sicheren Datenprotokolls realisierbar ist. Hiermit kann vermieden werden, dass fehlerhafte Daten übertragen werden und Dritte bei Verwendung nicht abhörsicherer Netzwerkverbindungen Einblick in die Daten erhalten.

Bevorzugt arbeitet die erste und/oder die zweite Schnittstelle mittels eines der folgenden Datenprotokolle oder kann für eines der folgenden Datenprotokolle nach Maßgabe der Einstellungen mittels des Konfigurationsmittels konfiguriert werden:
a) Web-Service-Standardformat OPC;
b) OPC UA - Standardformat;
c) Feldbus-Standardformat;
d) Proprietäres Datenprotokoll;

Insbesondere verwendet die erste Schnittstelle als erstes Datenprotokoll den OPC-UA-Standard mit XML-Datenformat oder Web-Service-Standard und die zweite Schnittstelle als zweites Datenprotokoll einen Feldbus-Standard oder ebenfalls den OPC-UA-Standard, allerdings mit binärem Datenformat. Hierbei dient der OPC-UA-Standard mit XML-Datenformat oder Web-Service-Standard als standardisierte Schnittstelle zum Fertigungsmanagementsystem, und der OPC-UA-Standard mit binärem Datenformat als standardisierte Schnittstelle zur Automatisierungskomponente. Diese Konfiguration ermöglichst ein leichtes Austauschen von mittels eines Fertigungsmanagementsystems überwachten Automatisierungskomponenten.

Vorteilhafterweise ist die Vorrichtung als Server realisiert, welcher als standardisierte Schnittstelle zwischen einem als Client ausgebildeten Fertigungsüberwachungssystem, und einer Automatisierungssystemkomponente fungiert und insbesondere mittels eines Personal Computers realisiert ist, welcher mittels Hardware - Schnittstellenkarten an das übergeordnete System und an die Automatisierungssystemkomponente angebunden ist. Die Vorrichtung kann dann rein softwarebasiert realisiert werden unter Verwendung der Hardware eines Standard - PC, was die Lösung preiswert und flexibel macht.

Ein Antriebssystem mit in das Antriebssystem integrierter oder externer erfindungsgemäßer Vorrichtung, wobei die Automatisierungssystemkomponente eine speicherprogrammierbare Steuerung (SPS) oder eine numerische Steuerung (CNC, NC) oder eine Bewegungssteuerung (Motion Control) oder ein elektrischer Antrieb (Drive) ist, kann mittels der Erfindung leicht an ein übergeordnetes Managementsystem angeschlossen werden. Dagegen hat ein Bearbeitungssystem, insbesondere Werkzeugmaschinen, mit integrierter oder externer erfindungsgemäßer Vorrichtung, die mittels der zweiten Schnittstelle an eine Automatisierungssystemkomponente angebunden ist, welches Teil des Bearbeitungssystems ist, den Vorteil, dass verschlissene Komponenten frühzeitig ausgewechselt werden können und das für das Bearbeitungssystem verantwortliche Personal bei einem sich abzeichnenden Fehler rechtzeitig bezüglich der Fehlerursache informiert werden kann, bevor es zu einem Ausfall des Bearbeitungssystems kommt.

Bei einem Fertigungsmanagementsystem mit integrierter oder externer erfindungsgemäßer Vorrichtung können Automatisierungskomponenten leicht ausgewechselt werden.

Bei Verwendung netzwerkbasierter Antriebssysteme oder netzwerkbasierter Fertigungsmanagementsysteme erstrecken sich die zuvor genannten Vorteile auf das gesamte System.

Besonders vorteilhaft ist die Erfindung, wenn viele Automatisierungskomponenten, beispielsweise im Rahmen einer Fertigungslinie, zu verwalten und zu überwachen sind, weil dies mittels der Erfindung sowohl zentralisiert oder zumindest teilzentralisiert erfolgen kann.

Die nachfolgend erläuterten Figuren stellen beispielhafte Realisierungsformen für die erfindungsgemäße Vorrichtung dar, welche nach dem erfindungsgemäßen Verfahren arbeitet. Nicht alle aufgeführten Merkmale sind stets für den erfinderischen Kern wesentlich und können durch gleichwertige Merkmale mit identischer Funktion ersetzt werden.

Es zeigen:
Figur 1: Die erfindungsgemäße Vorrichtung mit Innenleben;
Figur 2: Zum Betrieb der Vorrichtung erforderliche Funktionsmodule;
Figur 3a: Eine komplexe Netzwerkstruktur mit mehreren Vorrichtungen;
Figur 3b: Eine einfache Netzwerkstruktur mit einer Vorrichtung;
Figur 4: Ablauf eines Messvorgangs mittels der Vorrichtung;
Figur 5: Ablauf eines Schreibvorgangs mittels der Vorrichtung;
Figur 6: Ablauf eines Verarbeitungsvorgangs mittels der Vorrichtung.
Figur 7: Interaktionen zwischen den Komponenten der Vorrichtung.

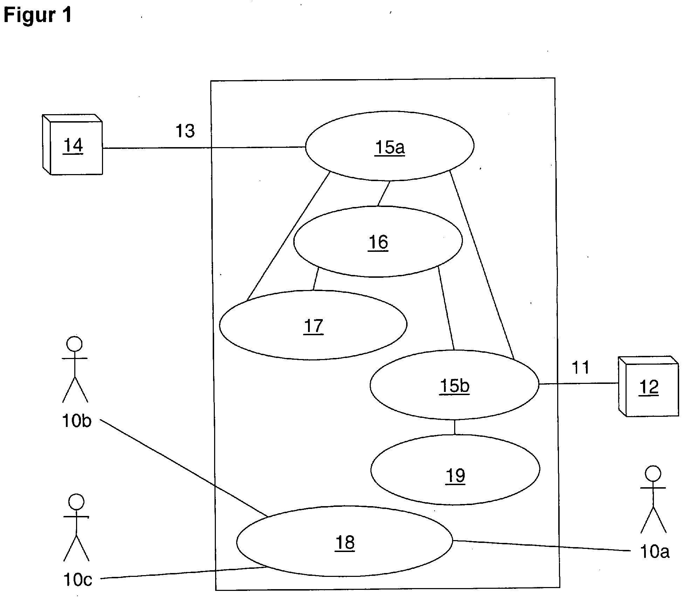

In Figur 1 ist die erfindungsgemäße Vorrichtung in Form eines sogenannten generischen, vorzugsweise PC-basierten, Datenservers (GDS) gezeigt. Der GDS umfasst eine erste Schnittstelle 11 zur Anbindung des Fertigungsmanagementsystems (MES) 12 an den GDS mittels des OPC-UA XML-Datenprotokolls und eine zweite Schnittstelle 13 zur Anbindung der Automatisierungssystemkomponente (z.B. SPS, NC, Antriebsregler) 14 an den GDS mittels des OPC-UA-Binär Datenprotokolls, wobei ein Datenerfassungsmittel 15a und ein Datenübertragungsmittel 15b umfasst sind, welche jeweils mit zumindest einer der Schnittstellen 11, 13 verbunden sind und welche untereinander zusätzlich derart verbunden sind, dass eine Kommunikation zwischen den an den Schnittstelle 11, 13 anschließbaren Systemen 12, 14 realisierbar ist, wobei ein Datenkonvertierungsmittel (nicht gezeigt) vom GDS umfasst ist, welches die Protokolle beider Schnittstellen ineinander überführt, wobei zusätzlich in den GDS ein Langzeitdatenspeicher 16 für die Speicherung von mittels des Datenerfassungsmittels 15a erfassten Rohdatendaten, insbesondere von Betriebsparametern der Automatisierungssystemkomponente 14, integriert ist. Zusätzlich ist eine in den GDS integrierte Datenanalyseeinheit 17 zur Analyse der im Langzeitdatenspeicher 16 abgelegten Rohdaten integriert. Weiterhin ist noch ein Konfigurationsmittel 18 vom GDS umfasst, welches zur Konfiguration der Datenanalyseeinheit 17 bezüglich der durchzuführenden Analyse und zur Konfiguration des GDS selbst dient, insbesondere zur Konfiguration bezüglich der Art und Weise der Weiterverarbeitung des Ergebnisses der Datenanalyse unter Verwendung einer der Schnittstellen 11, 13 oder mittels des Langzeitdatenspeichers 16. Der Begriff generischer Datenserver (GDS) wurde deshalb gewählt, weil der Server mit seiner stets gleichbleibenden inneren Struktur für verschiedenste Anwendungsfälle konfigurierbar ist.

Der MES -Administrator 10a oder der Maschinenhersteller 10b oder der Maschinenbetreiber 10c haben die Möglichkeit die internen Komponenten des GDS für einen spezifischen Anwendungsfall zu konfigurieren. Diese Konfiguration kann mittels eines öffentlichen (z.B. Internet) und/oder privaten (z.B. Intranet) Netzwerkes erfolgen. Die Konfiguration mittels des MES - Administrators 10a bezieht sich in erster Linie auf die Anbindung des MES - Systems 12 an den GDS. Hierzu wählt er mittels des Konfigurationsmittels 18 des GDS ein geeignetes Datenprotokoll aus (z.B. OPC-UA), mittels dessen der GDS zukünftig mit dem MES 12 kommuniziert. Die Konfiguration des Maschinenherstellers konzentriert sich in erster Linie auf die Anbindung der Automatisierungskomponente 14 (z.B. NC, SPS, Bewegungssteuerung, Robotik) an den GDS mittels eines systemspezifischen Protokolls, beispielsweise mittels eines Feldbusprotokolls oder des OPC-UA-Binärprotokolls, welches mittels des Konfigurationsmittels 18 des GDS auswählbar ist. Das Datenerfassungsmittel 15a ist nach der Konfiguration in der Lage Daten von der angeschlossenen Automatisierungssystemkomponente 14 mittels der Schnittstelle 13 und des automatisierungssystemseitigen Datenprotokolls zu erfassen und diese Daten in dem Langzeitdatenspeicher 16 mittels einer Datenbank oder eines Dateiverwaltungssystems abzuspeichern. Die Datenanalyseeinheit 17 greift direkt auf den Langzeitdatenspeicher 16 zu, um die Daten zu verarbeiten. Die Verarbeitung kann erfolgen beispielsweise durch:
- Mittelwertbildung und/oder
- Datenkomprimierung und/oder
- Datenfilterung und/oder
- Spektralanalyse.

Es sind alle im Stand der Technik bekannten Datenverarbeitungsmethoden denkbar, welche zu statistischen Zwecken oder sonstigen Analysen der Daten geeignet sind. Auch spezielle anwenderspezifisch implementierte Analysemethoden könnten mittels eines speziellen austauschbaren Funktionsmoduls in die Datenanalyseeinheit 17 geladen werden. Die Datenanalyseeinheit 17 kann auch unmittelbar (nicht also über den Langzeitdatenspeicher 16) die mittels des Datenerfassungsmittels 15a erfassten Daten direkt entgegennehmen und verarbeiten.

Das Datenübertragungsmittel 15b ist direkt mit dem Langzeitdatenspeicher 16 und dem Datenerfassungsmittel 15a verbunden. Somit hat das Datenübertragungsmittel 15b unmittelbar oder mittelbar auf die Komponenten 15a, 16, 17 Zugriff. Es ist daher möglich sowohl im Langzeitdatenspeicher 16, als auch von dem Datenerfassungsmittel 15a empfangene Daten, als auch von der Datenanalyseeinheit 17 analysierte Daten mittels des Datenübertragungsmittels 15b an das MES 12 mittels geeigneter Protokolle oder Datenstrukturen (z.B. Web Services, OPC-UA-XML, OPC-UA-Binär) zu übertragen. Das MES 12 kommuniziert somit indirekt mittels der internen Struktur 15a,b, 16,17 des GDS mit der Automatisierungskomponente 14. Zusätzlich besteht die Möglichkeit den GDS mittels des Konfigurationsmittels 18 so zu Konfigurieren, dass eine Datenschutzvorrichtung 19 aktiv wird, welche den Datentransfer schützt und zur Vergabe von Zugriffsrechten geeignet ist, wobei unterschiedlichen Bedienern 10a, 10b, 10c des GDS und/oder übergeordneten Systemen unterschiedliche Zugriffsrechte gewährt werden können.

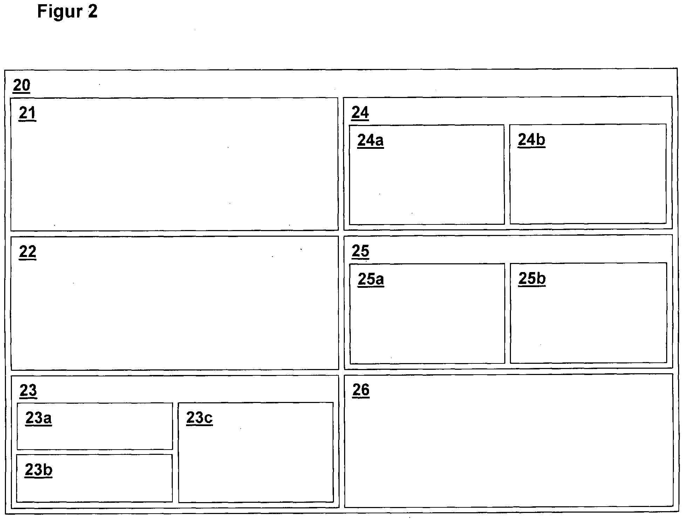

In Figur 2 ist eine Ausführungsform des GDS 20 mit integrierter Proxy - Funktionskomponente 21 gezeigt, welche die Aufgabe hat zwischen dem GDS 20 und einem externen Netzwerk (z.B. WAN, Internet, etc.) eine Kommunikationsverbindung zu gewährleisten. Weiter umfasst der GDS 20 eine Kommunikations-Funktionskomponente 22, mittels welcher die Kommunikation mit einem übergeordneten System direkt oder indirekt mittels der Proxy - Funktionskomponente 21 erfolgt.

Die im GDS 20 integrierte Datensammel-Funktionskomponente 23 umfasst ein Mittel 23a zur Entgegennahme von Daten, ein Steuerprogramm 23b und ein Datenspeichermittel 23c.

Die im GDS 20 integrierte Zugriffsüberwachung 24 umfasst eine Komponente zur Konfiguration einer sicheren Datenübertragung 24a (z.B. Wahl von Verschlüsselungsalgorithmen, VPN, sicheren Protokollen) abhängig vom angebundenen lokalen oder externen Netz. Die im GDS integrierte Zugriffsüberwachung 24 umfasst ebenfalls eine Komponente zur Konfiguration von Benutzerrechten 24b, um beispielsweise die Zugriffsrechte von Anwendern des GDS 20 zu vergeben und zu verwalten.

Weiterhin umfasst der GDS 20 ein Konfigurationsmittel 25 für Basiskonfigurationen 25a und verbindungsspezifische Konfigurationen 25b für Verbindungen zwischen GDS und einem übergeordneten System.

Mittels des Konfigurationsmittels 25 können unter anderem folgende vier Korifigurationsvorgänge ausgeführt werden:
1. Inbetriebnahme des GDS (Server Set-Up):
   Hierbei können Messpunkte zur Erfassung von Betriebszuständen einer an den GDS angeschlossenen Automatisierungskomponente definiert werden, indem beispielsweise SPS- oder NC-Variablen bzw. Eingänge bzw. Ausgänge an einer SPS (Speicherprogrammierbare Steuerung) oder NC (Numerische Steuerung) einem kundenspezifischen Kontext zugewiesen werden. Weiter ist es möglich Datenprotokolle für die GDS-Schnittstellen zu definieren und die Anbindung von an den GDS angeschlossenen Systemen, beispielsweise durch Vergabe von IP-Adressen, zu realisieren. Letztlich dient die Inbetriebnahme des Servers dazu die Automatisierungskomponenten von Bearbeitungszentren an den GDS derart anzubinden, dass diese mittels eines standardisierten Kommandos gezielt ansprechbar sind, so dass vorzugsweise mehrere Bearbeitungszentren von dem MES verwaltet werden können.
2. Konfiguration eines Messvorgangs:
   Zur Realisierung dieses Merkmals umfasst der GDS ein Konfigurationsmittel, wie beispielsweise einen Softwarebrowser oder eine Anwendung, welche sich eines vorhandenen Internetbrowsers bedient.
   a) Messpunkt auswählen:
      Hierzu wird ein zuvor definierter Messpunkt mittels des Browsers ausgewählt und es werden dem Messpunkt sogenannte Bezeichner zur eindeutigen Identifikation des Messpunktes zugeordnet, so dass auf den Messpunkt mittels der Bezeichner später zugegriffen werden kann. Somit ist es möglich eine Liste mit Bezeichnern mittels des Browsers zu erzeugen und zu verwalten und anschließend mittels dieser Liste indirekt auf die Messpunkte zuzugreifen.
   b) Lade-Zeitpunkt definieren:
      Anschließend wird definiert, wie der Messwert erfasst werden soll. Es wird damit praktisch der Lade-Zeitpunkt für den Messwert von der Hardware des Automatisierungssystems definiert. Folgende Auswahlmöglichkeiten stehen zur Verfügung:
      - zyklisches Laden;
      - Laden nur bei Änderung eines Messwertes;
      - Laden nur bei Grenzwertüberschreitung;
      - Laden bei Anforderung durch ein übergeordnetes System.

      Es ist dabei möglich diese Definitionen für einzelne oder für Gruppen von Messpunkten durchzuführen.
   c) Datenstruktur und Messreihen definieren:
      Es können mehrerer Messpunkte bzw. Bezeichner gruppiert werden. Zusätzlich können folgende Festlegungen erfolgen:
      - Bedingungen, unter denen eine Nachricht an ein übergeordnetes System versendet wird;
      - An welchen Adressaten eine Benachrichtigung versendet werden soll;
      - Wo Messwerte abgelegt werden sollen;
      - An welchem Ort im Speicher die Daten abgelegt werden sollen (Datenbank oder in einer Dateistruktur);
      - Speichergröße (n Werte);
      - Speicherprinzip (beispielsweise Ringpuffer);
      - Unter welchen Bedingungen der Speicher gelöscht wird.

      Auch die Datenstruktur für eine Messreihe könnte im Messpunkt-Browser mit eingebunden werden. Aufgrund dieser Maßnahmen ist die Datenstruktur der Messreihen eindeutig definiert.
3. Konfiguration des Schreibvorgangs:
   a) Bezeichner für Datenpunkte auswählen:
      Mittels des Browsers werden einem oder mehreren zu beschreibenden Datenpunkten eigene Bezeichner zugeordnet. Die Datenpunkte können mittels der Bezeichner adressiert werden. Datenpunkte könnten beispielsweise Eingabeeinheiten von Automatisierungskomponenten sein. Es ist auch möglich bereits erstellte Bezeichner für Datenpunkte zu kopieren oder abzuspeichern.
   b) Downloadzeitpunkt festlegen:
      Weiterhin wird der Zeitpunkt festgelegt, wann der Schreibvorgang erfolgt, d.h. wann die Datenpunkte mittels der Bezeichner beschrieben werden. Hierzu ist es erforderlich die Bedingungen für den Schreibvorgang zu definieren.
      Folgende Bedingungen könnten beispielsweise definiert werden, damit ein Schreibvorgang veranlasst wird:
      - Schreiben aufgrund eines Analyse- oder Berechungsergebnisses;
      - Schreiben bei manueller Anforderung durch das übergeordnete System;
      - Schreiben bei bestimmten Systemzuständen (z.B. nur im Wartungsfalle).

      Diese Definitionen sind sowohl für einzelne Bezeichner als auch für Gruppen von Bezeichnern möglich.
   c) Abhängigkeiten definieren:
      Es können mehrerer Bezeichner gruppiert werden. Zusätzlich können folgende Festlegungen erfolgen:
      - Unter welchen Umständen eine Benachrichtigung versendet werden soll;
      - An welchen Adressaten eine Benachrichtigung versendet werden soll;
      - Wo Messwerte abgelegt werden sollen;
      - An welchem Ort im Speicher die Daten abgelegt werden sollen (Datenbank oder in einer Dateistruktur);
      - Speichergröße (n Werte);
      - Speicherprinzip (beispielsweise Ringpuffer);
      - Unter welchen Bedingungen der Speicher gelöscht wird;
4. Konfiguration eines Verarbeitungsvorgangs:
   Vom aus Figur 2 bekannten GDS 20 ist zusätzlich eine Vorverarbeitungseinheit für Daten umfasst. Der Begriff Vorverarbeitungseinheit wurde gewählt, weil mittels der Vorverarbeitung die Optimierung der Kommunikation zwischen GDS und MES und damit eine Entlastung des MES erreicht werden kann. Die eigentliche Verarbeitung der Daten im Sinne eines Leitstandes oder einer Prozesssteuerung erfolgt jedoch weiterhin beispielsweise mit dem MES.
   Die Konfiguration eines Verarbeitungsvorganges kann folgende Schritte umfassen:
   a) Definition des Verarbeitungszeitpunktes:
      Es wird zunächst ein Startereignis definiert. Die Verarbeitung kann abhängig von diesem Startereignis zyklisch in bestimmten Zeitabständen oder zu definierten Zeitpunkten gestartet werden. Außerdem kann definiert werden, unter welchen Umständen die Verarbeitung gestartet werden soll, z.B.:
      - bei wiederkehrenden Ereignissen;
      - bei Anforderung durch den Nutzer;
      - bei Start durch ein übergeordnetes System;
      - wenn ein Messpunkt einen bestimmten Wert annimmt (z.B. Wechsel der Betriebsart);
      - wenn der Speicher bis zu einer bestimmten Größe belegt ist (z.B. Speicher zu 90% mit Daten gefüllt).
   b) Definition der Datenstruktur für die aufzubereitenden Messdaten:
      Hierbei können Messdaten gruppiert werden. Es kann festgelegt werden wo im GDS Auswertungsergebnisse abgelegt werden sollen (Datenbank, Dateisystem) und ob, beziehungsweise an welchen Adressaten, eine Benachrichtigung bezüglich vorhandener Berechnungsergebnisse versendet werden soll. Es kann ebenso die Speichergröße (z.B. n Datenbytes in einem Ringpuffer) definiert werden. Des Weiteren kann definiert werden, ob zusammen mit den aufbereiteten Daten ein Verweis auf die für die Berechnung verwendete Datengrundlage abgespeichert werden soll. Es kann beispielsweise darauf verwiesen werden, woher die Eingangsdaten für die Berechnung stammen und wie diese dem Ergebnis zuzuordnen sind. Es liegen außerdem Informationen vor, wie viele Eingabewerte für die Berechnung verwendet wurden, aus welchem Zeitraum diese Eingabewerte stammen und ob sie noch im Datenspeicher gespeichert oder bereits gelöscht sind. Außerdem kann definiert werden, ob und wie die Datenstruktur für die aufbereiteten Messwerte im Messpunkt-Browser eingebunden wird.
   c) Definition der Verarbeitung:
      In einem dritten Schritt wird die Art und Weise der Datenverarbeitung definiert, beispielsweise durch Auswahl eines geeigneten Algorithmus, beispielsweise zur Berechnung eines Mittelwertes, zu Berechnung von Minimal- oder Maximalwerten oder zur Durchführung einer Fouriertransformation. Bestimmte Eingänge und/oder Ausgänge einer an den GDS angeschlossenen Automatisierungssystemkomponente können gezielt mit einem Algorithmus verknüpft werden, so dass unterschiedliche Algorithmen für unterschiedliche Betriebsparameter der Automatisierungskomponente zum Einsatz kommen. Auch ist es möglich im Rahmen der Verarbeitung die korrekte Verschaltung zu validieren, beispielsweise bezüglich der Datentypen und der Datenmenge, wie zum Beispiel die Mindestanzahl von Eingangswerten.

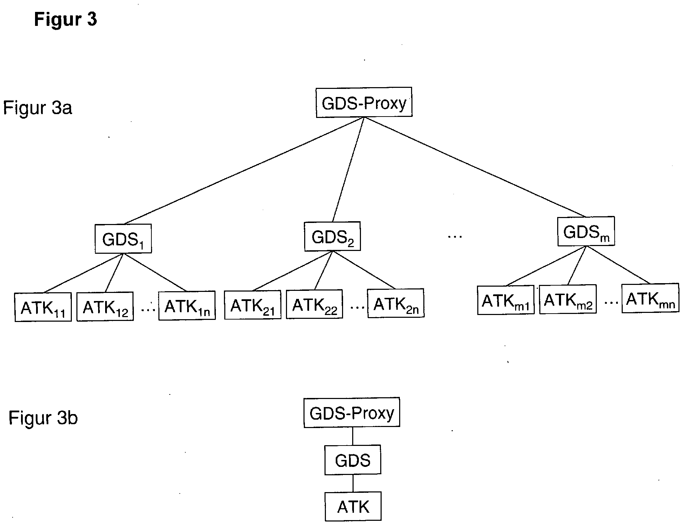

Figur 3a zeigt ein Netzwerk mit mehreren GDS. An jeden GDS1 bis GDSm können wiederum mehrere Automatisierungskomponenten ATK11 bis ATKmn mittels eines entsprechenden Datenprotokolls angebunden sein (z.B. OPC-UA-Binär). Die Punkte zwischen GDS2 und GDSm sollen deutlich machen, dass das in Figur 3 gezeigte Netzwerk theoretisch beliebig erweiterbar ist und hier weitere GDS eingefügt werden können. Die Komponenten sind hier sternförmig miteinander verbunden. Alle GDS sind mittels einer Übertragungsstrecke mit einem übergeordnete GDS-Proxy verbunden, wobei der GDS-Proxy die Anbindung an ein übergeordnetes Netzwerk ermöglicht.

Figur 3b zeigt die einfachste Realisierungsform und stellt im Prinzip nur einen einzigen Zweig aus der in Figur 3a gezeigten Lösung dar. Hier ist eine Automatisierungskomponente ATK gezeigt, welche mittels eines sicheren Datenprotokolls mit dem GDS und dieser wiederum mit dem GDS-Proxy kommuniziert.

Für beide Figuren 3a und 3b gilt, dass die Automatisierungskomponente ATK mittels der hier gezeigten Lösung flexibel mit einem übergeordneten MES verbunden werden kann. Der GDS-Proxy hat die Aufgabe der Verwaltung von Internetadressen bzw. Netzwerkadressen und das lokale Netzwerk mit den generischen Datenservern GDS1 bis GDSm mit dem Internet zu verbinden.

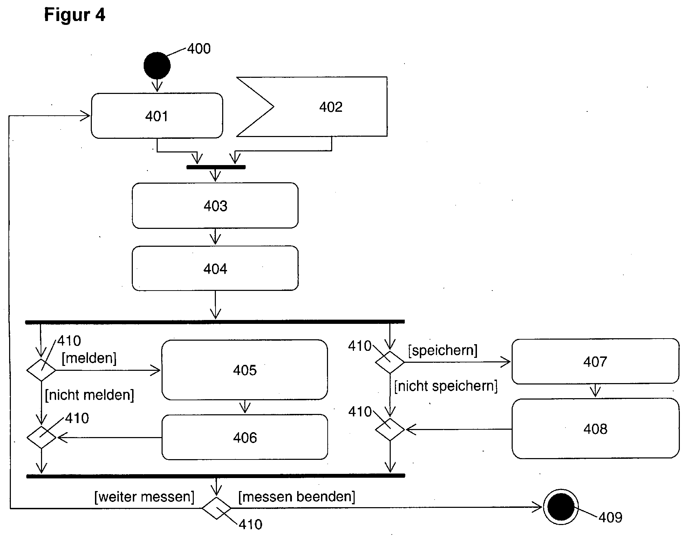

In Figur 4 ist die Überwachung der Automatisierungskomponente (z.B. SPS, NC) mittels des erfindungsgemäßen GDS dargestellt, insbesondere der Ablauf eines Messvorganges an der E/A-Einheit einer Automatisierungskomponente (z.B. SPS, NC) unter Verwendung des GDS. Wie in Figur 2 bereits erläutert, umfasst der GDS ein integriertes Datenempfangsmittel 23a mit einem Steuerprogramm 23b. Es wird auf die in Figur 2 beschriebenen Komponenten hier jeweils Bezug genommen.

Das Steuerprogramm 23b spielt bei dem Ablauf des Messvorgangs eine zentrale Rolle. Sobald vom einem aktuellen Betriebszustand 400 (z.B. initialer Betriebszustand: GDS gestartet und konfiguriert) des GDS in den Betriebszustand Messdatenverarbeitung 401 gewechselt wurde, wartet das Steuerprogramm 23b auf ein externes Ereignis 402. Das externe Ereignis 402 könnte beispielsweise eine fallende oder steigende Flanke an einer E/A-Einheit der Automatisierungskomponente sein und ist am GDS konfigurierbar. Tritt das externe Ereignis 402 auf, so stößt das Steuerprogramm23b in einem nächsten Schritt 403 den Empfang von Daten an, wodurch der aktuelle Wert eines zuvor definierten Messpunktes (E/A-Einheit) an der Automatisierungssystemkomponente in Schritt 404 eingelesen wird.

Der weitere Ablauf kann nun folgendermaßen mittels implementierter Verzweigungen 410 erfolgen: Der eingelesene Messwert ist entweder relevant ("melden"), weil er beispielsweise einen vorgegebenen Schwellwert überschreitet und muss beachtet oder gespeichert werden. Oder der eingelesene Messwert ist nicht relevant ("nicht melden") und muss nicht beachtet oder gespeichert werden. Muss der Messwert beachtet werden, so wird er zur Übergabe an das übergeordnete System aufbereitet 405, indem er in ein für die erste Schnittstelle geeignetes Datenprotokoll (z.B. OPC-UA-XML) eingebunden wird und an das übergeordnete System übermittelt wird 406. Alternativ oder zusätzlich kann der Messwert an das aus Figur 2 bekannte Datenspeichermittel 23c übergeben und dort abgespeichert werden (407, 408).

Anschließend wird mittels einer weiteren Verzweigung 410 entschieden, ob weitere Messungen ("weiter messen") erfolgen oder die Messung beendet ("Messung beenden") wird, so dass ein neuer Betriebsmodus 409 eingenommen werden kann (z.B. Betriebszustand: "Server stopp" oder "Messdatenerfassung abgeschlossen").

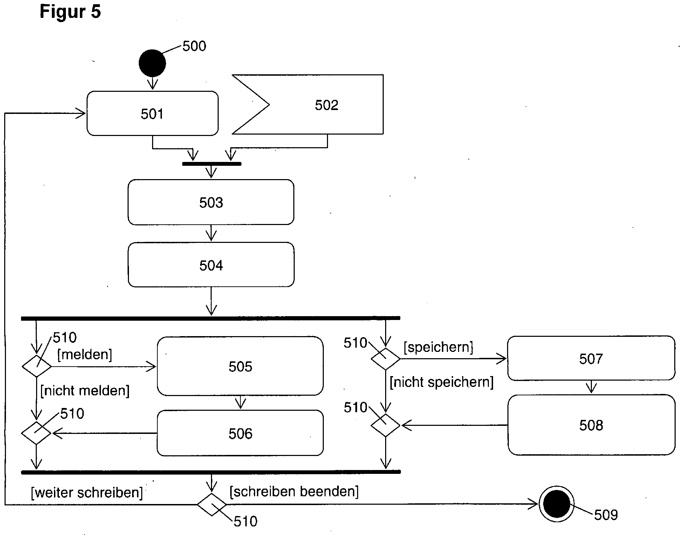

In Figur 5 ist der logische Ablauf für einen mittels des GDS initiierten Schreibvorgang dargestellt. Wie in Figur 4 bereits erwähnt, umfasst der GDS ein integriertes Datensammelmittel 23 mit einem Datenerfassungsmittel 23a, einem Steuerprogramm 23b und einem Datenspeicher 23c. Es wird diesbezüglich auf Figur 2 und die dazugehörige Erläuterung weiter oben verwiesen.

Sobald der GDS von einem beliebigen aktuellen Betriebszustand (z.B. Initialer Betribszustand, GDS gestartet und konfiguriert) 500 in den Betriebszustand Schreiben 501 wechselt, wartet das Steuerprogramm 23b auf ein externes Ereignis 502. Das externes Ereignis 502 könnte beispielsweise eine Sollwertvorgabe eines Benutzers am übergeordneten System sein. Auf welches externe Ereignis 502 das Steuerprogramm 23b reagiert und wie es reagiert, kann mittels des Konfigurationsmittels 25 des GDS konfiguriert werden. Tritt das externe Ereignis 502 nach der Konfiguration auf, so stößt das Steuerprogramm 23b in einem nächsten Schritt 503 die Entgegennahme von Daten mittels des Datenerfassungsmittels 23a an, wodurch Daten an einen Datenpunkt im GDS im darauf folgenden Schritt 504 geschrieben werden. Unter dem Begriff Datenpunkt wird beispielsweise ein Prozessparameter oder Maschinenparameter verstanden, dessen Sollwert änderbar ist.

Der weitere Ablauf wird nun mittels im GDS implementierter logischer Entscheidungspunkte 510 festgelegt (siehe analog auch Erläuterungen zu Bezugszeichen 410 in Figur 4). Diese bestimmen letztlich ob und wie die Daten weiterverarbeitet werden.

Im Anschluss an den Schritt 504 verzweigt sich die Programmlogik derart, dass sowohl eine der Schnittstellen des GDS (siehe Figur 1 mit Beschreibung) als auch der Datenspeicher 23c (siehe Figur 2 mit Beschreibung) des GDS als Datensenke verwendet werden kann.

Im Rahmen des ersten Zweiges übergibt das Datenerfassungsmittel 23a die aktuell erfassten Daten an eine der Schnittstellen mittels Schritt 505, sofern die Daten die notwendigen Kriterien erfüllen. Wurde der Schritt 505 ausgeführt, so werden die Daten in einem Folgeschritt 506 mittels der Schnittstelle versendet. Die Schnittstelle könnte hier beispielsweise die erste Schnittstelle 11 des GDS sein, an den ein MES 12 angeschlossen ist, wobei mit dem MES 12 beispielsweise mittels eines Internetprotokolls kommuniziert wird. Nach der Datenübergabe wird entweder der Schreibvorgang beendet und in einen anderen Betriebszustand 509 übergegangen (z.B. Betriebszustand: "Server wird gestoppt") oder es wird wieder zurück verzweigt zu Schritt 501, so dass das Steuerprogramm 23b wie weiter oben beschrieben weiterhin auf ein Ereignis wartet, welches mittels Schritt 502 definiert wurde.

Sollen die Daten gespeichert werden, so übergibt das Datenerfassungsmittel 23a die Daten mittels des zweiten Zweiges im Rahmen des Programmschrittes 507 an den Datenpuffer, beziehungsweise an den Datenspeicher 23c. Mittels der Entscheidungspunkte 510 wird darüber entschieden, ob eine Abspeicherung (Schritt 508) erfolgt oder nicht.

Auch nach diesem Programmzweig kann ebenfalls entweder der Schreibvorgang beendet und in einen anderen Betriebszustand 509 übergegangen werden, oder es wird wieder zurück verzweigt zu Schritt 501.

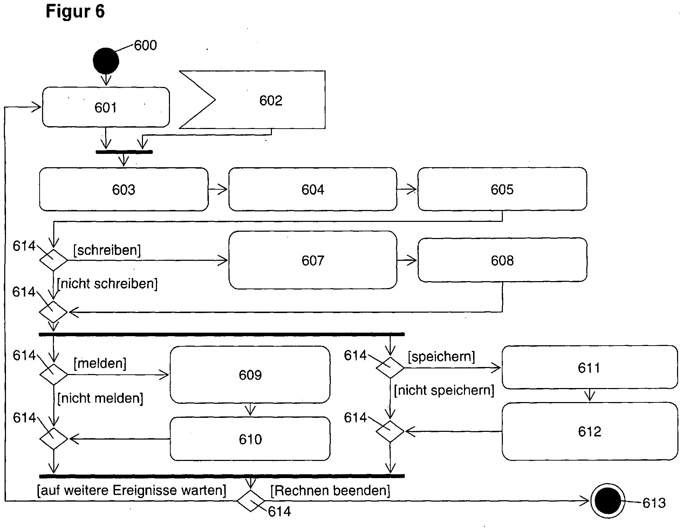

In Figur 6 ist der logische Ablauf für einen mittels des GDS initiierten Verarbeitungsvorgang dargestellt. Es wird diesbezüglich erneut auf Figur 2 und die dazugehörige Erläuterung weiter oben verwiesen.

Sobald der GDS von einem beliebigen aktuellen Betriebszustand (z.B. Initialer Betriebszustand: GDS wurde gestartet und konfiguriert) 600 in den Betriebszustand 601 wechselt, wartet das Steuerprogramm des Prozessors auf ein definiertes externes Ereignis 602. Beispielsweise fordert der Benutzer eine Auswertung erfasster Messdaten an, mittels der er beispielsweise aus den Messdaten eines Kreisformtests das "Umkehrspiel" durch die Datenvorverarbeitungseinheit 26 ermitteln lässt.

Auf welches externe Ereignis 602 das Steuerprogramm 23b reagiert und wie es reagiert kann mittels des GDS konfiguriert werden. Tritt das externe Ereignis 602 nach der Konfiguration auf, so stößt das Steuerprogramm 23b der aus Figur 2 bekannten Datensammel-Funktionskomponente 23 die Datenvorverarbeitungseinheit 26 in einem ersten Bearbeitungsschritt 603 an.

Die Datenvorverarbeitungseinheit 26 liest Daten aus dem Datenspeicher 23c in einem zweiten Bearbeitungsschritt 604 aus und führt eine Datenanalyse oder Berechnungen unter Berücksichtigung der Daten im Rahmen eines dritten Bearbeitungsschrittes 605 aus. Die Datenberechnungseinheit 26 umfasst zumindest eine austauschbare Funktionseinheit, mittels derer der Algorithmus für die Datenanalyse definierbar ist. Mittels der Entscheidungspunkte 614 wird der weitere Ablauf bestimmt. Sollen die der Analyse zugrundeliegenden Daten an einen Datenpunkt geschrieben werden, so übergibt die Datenvorverarbeitungseinheit 26 im Rahmen des Bearbeitungsschrittes 607 das Ergebnis der Berechnung an das aus Figur 2 bekannte Datenempfangsmittel 23a, wobei anschließend im Rahmen des Bearbeitungsschrittes 608 der eigentliche Schreibvorgang der Daten an den Datenpunkt initiiert wird.

Im Anschluss an den Schritt 608 verzweigt sich die Programmlogik derart, dass sowohl eine der Schnittstellen des GDS (siehe Figur 1 mit Beschreibung) als auch der Datenspeicher 23c (siehe Figur 2 mit Beschreibung) des GDS als Datensenke verwendet werden könnte.

Im Rahmen des ersten Zweiges übergibt die Datenberechnungseinheit 26 die aktuell erfassten Daten an eine der Schnittstellen mittels Schritt 609. Wurde der Schritt 609 ausgeführt, so werden die Daten in einem Folgeschritt 610 mittels einer der Schnittstellen des GDS versendet. Die Schnittstelle könnte hier beispielsweise die erste Schnittstelle 11 des GDS sein, an die ein MES 12 angeschlossen ist, wobei mit dem MES 12 mittels eines Internetprotokolls kommuniziert wird und die Daten mittels dieses Protokolls übergeben werden. Nach der Datenübergabe wird entweder der Verarbeitungsvorgang beendet und in einen anderen Betriebszustand 613 übergegangen (z.B. Betriebszustand: Server wird gestoppt) oder es wird wieder zurück verzweigt zu Schritt 601, so dass das Steuerprogramm 23b, wie weiter oben beschrieben, weiterhin auf ein Ereignis wartet, welches mittels Schritt 602 definiert wurde.

Sollen die Daten gespeichert werden, so übergibt die Vorverarbeitungseinheit 26 die Daten mittels des zweiten Zweiges im Rahmen des Programmschrittes 611 an den Datenpuffer beziehungsweise den Datenspeicher 23c und speichert diese dort im Rahmen des Schrittes 612 abhängig vom Zustand des Entscheidungspunkte 614 ab.

Auch nach diesem Programmzweig wird entweder der Schreibvorgang beendet und in einen anderen Betriebszustand 613 übergegangen, oder es wird wieder zurück verzweigt zu Schritt 601 und ein externes Ereignis 602 abgewartet.

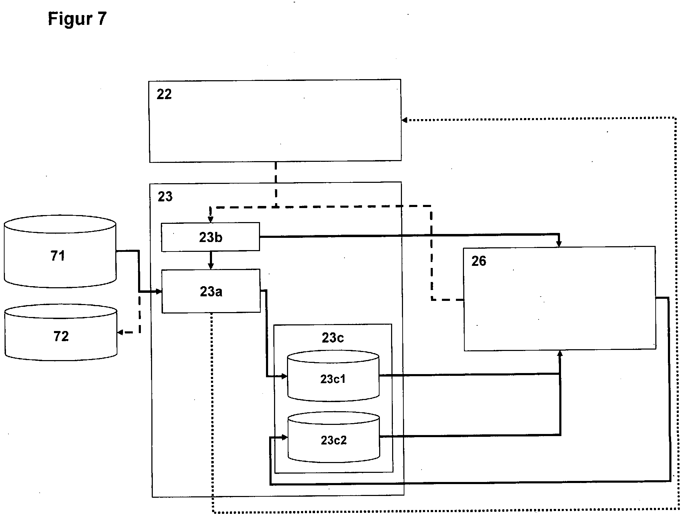

Figur 7 zeigt nochmals einige aus der Figurenbeschreibung zu Figur 2 bereits bekannte Komponenten und deren gegenseitige Interaktion während des Betriebes des GDS, insbesondere während der in den Figuren 4 bis 6 gezeigten und zuvor beschriebenen Programmabläufe. Es wurden die aus Figur 2 bekannten Bezugszeichen hier nochmals verwendet. Zusätzlich sind gezeigt: Messpunkte/Monitordaten 71 und beschreibbare Datenpunkte 72.

Die Kommunikations-Funktionskomponente 22 umfasst Kommunikationsschnittstellen (Web Services, OPC-UA XML, OPC-UA binär) auf die das Datenerfassungsmittel 23a der Datensammel-Funktionskomponente 23 Zugriff hat, so dass Daten vom Datenerfassungsmittel 23a mittels des Steuerprogramms 23b von der Vorverarbeitungseinheit 26 an die Kommunikationsschnittstellen der Kommunikationskomponente 22 übertragen werden können. Umgekehrt kann die Kommunikationskomponente 22 auch Daten, die von der externen Peripherie mittels der Kommunikationsschnittstellen an den Server übertragen werden, mittelbar mittels des Steuerprogramms 23b an das Datenerfassungsmittel 23a übermitteln.

Der Datenspeicher 23c kann sowohl strukturierte Messreihen 23c1 umfassen als auch aufbereitete Messdaten 23c2. Die Daten für die Speicherung strukturierter Messreihen empfängt der Datenspeicher 23c vom Datenerfassungsmittel 23a, wobei die Vorverarbeitungseinheit 26 diese Messreihen auslesen kann.

Aufbereitete Messdaten empfängt der Datenspeicher 23c beispielsweise von der Vorverarbeitungseinheit 26. Der Datenspeicher 23c dient quasi als Zwischenspeicher oder Speicher für Zwischenergebnisse, wobei die Vorverarbeitungseinheit 26 diese Zwischenergebnisse hier sowohl ablegen, als auch wieder auslesen kann.

Das Datenerfassungsmittel 23a kann Daten von den Messpunkten 71 einmalig oder regelmäßig einlesen (Monitorbetrieb) und Datenpunkte 72 einmalig oder regelmäßig beschreiben. Das Datenerfassungsmittel 23a hat Zugriff auf den Datenspeicher 23c, insbesondere auf den Speicherbereich 23c1 zur Abspeicherung von strukturierten Messreihen.

Je nach Betriebsart (Initialisieren, Konfigurieren, Messen/Lesen, Schreiben, Verarbeiten) können die oben beschriebenen Schritte und Datentransfers teilweise gleichzeitig oder sequentiell vom GDS abgearbeitet werden.

## Patentansprüche

1. Vorrichtung mit einer ersten Schnittstelle (11) zur Anbindung eines übergeordneten Systems (12) an die Vorrichtung mittels eines ersten Datenprotokolls und mit einer zweiten Schnittstelle (13) zur Anbindung einer Automatisierungssystemkomponente (14) an die Vorrichtung mittels eines zweiten Datenprotokolls, wobei ein Datenerfassungsmittel (15a) und ein Datenübertragungsmittel (15b) umfasst sind, welche jeweils mit zumindest einer der Schnittstellen (11,13) verbunden sind und untereinander derart verbunden sind, dass eine Kommunikation zwischen den an den Schnittstelle (11,13) anschließbaren Systemen (12,14) realisierbar ist, wobei ein Datenkonvertierungsmittel umfasst ist, welches ausgestaltet ist, die Protokolle beider Schnittstellen ineinander zu überführen, wobei das erste Datenprotokoll gleich dem zweiten Datenprotokoll ist oder von dem zweiten Datenprotokoll verschieden ist, und wobei zusätzlich von der Vorrichtung umfasst sind:
a) ein in die Vorrichtung integrierter Langzeitdatenspeicher (16) für die Speicherung von mittels des Datenerfassungsmittels (15a) erfassten Rohdaten, insbesondere von Betriebsparametern einer an die Vorrichtung anschließbaren Automatisierungssystemkomponente;
b) eine in die Vorrichtung integrierte Datenanalyseeinheit (17) zur Analyse der im Langzeitdatenspeicher (16) abgelegten Rohdaten, um mittels der Datenanalyseeinheit während oder nach der Pufferung die mittels der zweiten Schnittstelle mitprotokollierten Daten zu untersuchen und daraus Erkenntnisse bezüglich des Zustands der Automatisierungskomponente abzuleiten;
c) ein in die Vorrichtung integriertes Konfigurationsmittel (18) zur Konfiguration der Datenanalyseeinheit (17) bezüglich der durchzuführenden Analyse und zur Konfiguration der Vorrichtung bezüglich der Art und Weise der Weiterverarbeitung des Ergebnisses der Datenanalyse mittels einer der Schnittstellen (11,13) oder mittels des Langzeitdatenspeichers (16).

2. Vorrichtung nach Anspruch 1, wobei die Datenanalyseeinheit (17) zumindest eine austauschbare Funktionseinheit umfasst, mittels derer die Funktion der Datenanalyseeinheit (17) definierbar ist und welche mittels des Konfigurationsmittels (18) verwaltet wird.

3. Vorrichtung nach einem der vorhergehenden Ansprüche, wobei das Datenerfassungsmittel (15a) unmittelbaren Zugriff auf die Datenanalyseeinheit (17) hat.

4. Vorrichtung nach einem der vorhergehenden Ansprüche, wobei das Datenübertragungsmittel (15b) unmittelbaren Zugriff auf den Langzeitdatenspeicher (16) hat.

5. Vorrichtung nach einem der vorhergehenden Ansprüche, wobei mittels des Konfigurationsmittels (18) die Vorrichtung selbst konfigurierbar ist, insbesondere jedoch der Schreibvorgang mittels einer der Schnittstellen (11,13) und/oder der Lesevorgang von einer der Schnittstellen (11,13) und/oder die Initialisierung der Vorrichtung und/oder der Ablauf von Messvorgängen unter Verwendung zumindest einer der Schnittstellen (11,13).

6. Vorrichtung nach einem der vorhergehenden Ansprüche, wobei eine Datenschutzvorrichtung (19) umfasst ist, mittels derer eine Sicherung der zu übertragenden Daten mittels eines Datenprotokolls realisierbar ist und/oder mittels derer Zugriffsrechte auf einzelne Komponenten und/oder in der Vorrichtung abgelegten Daten vergeben werden können.

7. Vorrichtung nach einem der vorhergehenden Ansprüche, wobei die erste und/oder die zweite Schnittstelle (11,13) mittels eines der folgenden Datenprotokolle arbeitet:
a) Web-Service-Standardformat OPC;
b) OPC - UA - Standardformat;
c) Feldbus-Standardformat;
d) Proprietäre Datenprotokolle.

8. Vorrichtung nach einem der vorhergehenden Ansprüche, wobei die Vorrichtung als Server realisiert ist, welcher als standardisierte Schnittstelle zwischen einem als Client ausgebildeten übergeordneten System (12), insbesondere einem Fertigungsüberwachungssystem (12), und einer Automatisierungssystemkomponente (14) fungiert und insbesondere mittels eines Personal Computers realisiert ist, welcher mittels Hardware - Schnittstellenkarten an das übergeordnete System (12) und an die Automatisierungssystemkomponente (14) angebunden ist.

9. Antriebssystem mit integrierter oder externer Vorrichtung nach einem der vorhergehenden Ansprüche, wobei die Automatisierungssystemkomponente (14) eine speicherprogrammierbare Steuerung und/oder eine numerische Steuerung und/oder eine Bewegungssteuerung und/oder ein elektrischer Antrieb ist.

10. Bearbeitungssystem, insbesondere Werkzeugmaschine, mit integrierter oder externer Vorrichtung nach einem der Ansprüche 1 bis 8, wobei die mittels der zweiten Schnittstelle (13) angebundene Automatisierungssystemkomponente (14) Teil des Bearbeitungssystems ist.

11. Fertigungsmanagementsystem mit integrierter oder externe Vorrichtung nach einem der Ansprüche 1 bis 8.

12. Netzwerkbasiertes Antriebssystem mit einer Komponente nach einem der vorhergehenden Ansprüche.

13. Netzwerkbasiertes Fertigungsmanagementsystem mit einer Komponente nach einem der vorhergehenden Ansprüche.

14. Fertigungslinie mit einer Komponente nach einem der vorhergehenden Ansprüche.

15. Verfahren zum Betrieb einer Vorrichtung nach einem der vorhergehenden Ansprüche 1 bis 8, mit folgenden Verfahrensschritten:
a) Selbsttätiges Einlesen eines Betriebsparameters einer an die Vorrichtung anschließbaren Automatisierungssystemkomponente (14) mittels der zweiten Schnittstelle (13) in den Langzeitdatenspeicher (16);
b) Selbsttätiges Auslesen des Langzeitdatenspeichers und Analyse der Daten nach Maßgabe einer austauschbaren Datenanalysevorschrift mittels der Datenanalyseeinheit (17) um daraus Erkenntnisse bezüglich des Zustands der Automatisierungskomponente abzuleiten und selbsttätige Aufbereitung des Analyseergebnisses für die Weiterverarbeitung des Ergebnisses;
c) Selbsttätige Weiterverarbeitung der Analyseergebnisse mittels der ersten Schnittstelle (11) und/oder mittels der zweiten Schnittstelle (13) und/oder mittels des Langzeitdatenspeichers (16);

16. Verfahren nach Anspruch 15, wobei das selbsttätige Einlesen von Daten in den Langzeitdatenspeicher (16) aufgrund eines externen Ereignisses erfolgt, welches von der Vorrichtung erkannt wird und welches mittels des Konfigurationsmittels (18) konfigurierbar ist.

17. Verfahren nach einem der Ansprüche 15 oder 16, wobei mittels der zweiten Schnittstelle (13) Betriebsparameter einer an die Vorrichtung angeschlossenen Automatisierungssystemkomponente (14) verändert werden.

18. Verfahren nach einem der Ansprüche 15 bis 17, wobei im Falle des Schreibens der Analyseergebnisse in den Langzeitdatenspeicher (16) diese Analyseergebnisse erneut mittels der Datenanalyseeinheit (17) aus dem Langzeitdatenspeicher (16) ausgelesen und erneut analysiert werden.

19. Verfahren nach einem der Ansprüche 15 bis 18, wobei mittels einer der Schnittstellen (11,13) Daten aus dem Langzeitdatenspeicher (16) mittels eines an die erste Schnittstelle (11) angeschlossenen übergeordneten Systems (12) von diesem übergeordneten System (12) abgerufen werden.

## Claims

1. Apparatus having a first interface (11) for connecting a superordinate system (12) to the apparatus by means of a first data protocol and having a second interface (13) for connecting an automation system component (14) to the apparatus by means of a second data protocol, wherein a data capture means (15a) and a data transmission means (15b) are comprised that are each connected to at least one of the interfaces (11, 13) and are connected to one another such that communication between the systems (12, 14) connectable to the interface (11, 13) is realizable, wherein a data conversion means is comprised that is configured to convert the protocols of the two interfaces into one another, the first data protocol being the same as the second data protocol or being different from the second data protocol, and wherein the apparatus additionally comprises:
a) a long-term data memory (16), integrated in the apparatus, for storing raw data captured by means of the data capture means (15a), in particular operating parameters of an automation system component connectable to the apparatus;
b) a data analysis unit (17), integrated in the apparatus, for analysing the raw data stored in the long-term data memory (16) in order to use the data analysis unit, during or after buffering, to examine the data concomitantly logged by means of the second interface and to derive findings therefrom regarding the state of the automation component;
c) a configuration means (18), integrated in the apparatus, for configuring the data analysis unit (17) for the analysis to be performed and for configuring the apparatus for the manner of further processing of the result of the data analysis by means of one of the interfaces (11, 13) or by means of the long-term data memory (16).

2. Apparatus according to Claim 1, wherein the data analysis unit (17) comprises at least one removable functional unit by means of which the function of the data analysis unit (17) is definable and that is managed by means of the configuration means (18).

3. Apparatus according to either of the preceding claims, wherein the data capture means (15a) has direct access to the data analysis unit (17).

4. Apparatus according to one of the preceding claims, wherein the data transmission means (15b) has direct access to the long-term data memory (16).

5. Apparatus according to one of the preceding claims, wherein the apparatus itself, but in particular the write process by means of one of the interfaces (11, 13) and/or the read process by one of the interfaces (11, 13) and/or the initialization of the apparatus and/or the sequence of measuring processes using at least one of the interfaces (11, 13), is configurable by means of the configuration means (18).

6. Apparatus according to one of the preceding claims, wherein a data protection apparatus (19) is comprised by means of which saving of the data to be transmitted is realizable by means of a data protocol and/or by means of which access rights to individual components and/or to data stored in the apparatus can be allocated.

7. Apparatus according to one of the preceding claims, wherein the first and/or the second interface (11, 13) operates by means of one of the following data protocols:
a) web service standard format OPC;
b) OPC UA standard format;
c) field bus standard format;
d) proprietary data protocols.

8. Apparatus according to one of the preceding claims, wherein the apparatus is realized as a server that acts as a standardized interface between a superordinate system (12) in the form of a client, in particular a production monitoring system (12), and an automation system component (14) and in particular is realized by means of a personal computer connected to the superordinate system (12) and to the automation system component (14) by means of hardware interface cards.

9. Drive system having an integrated or external apparatus according to one of the preceding claims, wherein the automation system component (14) is a programmable logic controller and/or a numeric controller and/or a motion controller and/or an electric drive.

10. Machining system, in particular machine tool, having an integrated or external apparatus according to one of Claims 1 to 8, wherein the automation system component (14) connected by means of the second interface (13) is part of the machining system.

11. Production management system having an integrated or external apparatus according to one of Claims 1 to 8.

12. Network-based drive system having a component according to one of the preceding claims.

13. Network-based production management system having a component according to one of the preceding claims.

14. Production line having a component according to one of the preceding claims.

15. Method for operating an apparatus according to one of the preceding Claims 1 to 8, having the following method steps:
a) autonomously reading an operating parameter of an automation system component (14), connectable to the apparatus, into the long-term data memory (16) by means of the second interface (13);
b) autonomously reading the long-term data memory and analysing the data as stipulated by an interchangeable data analysis rule by means of the data analysis unit (17) in order to derive findings therefrom regarding the state of the automation component and autonomously conditioning the analysis result for the further processing of the result;
c) autonomously further-processing the analysis results by means of the first interface (11) and/or by means of the second interface (13) and/or by means of the long-term data memory (16).

16. Method according to Claim 15, wherein the autonomous reading of data into the long-term data memory (16) is effected on the basis of an external event that is detected by the apparatus and that is configurable by means of the configuration means (18).

17. Method according to either of Claims 15 and 16, wherein the second interface (13) is used to alter operating parameters of an automation system component (14) connected to the apparatus.

18. Method according to one of Claims 15 to 17, wherein when the analysis results are written to the long-term data memory (16) these analysis results are read from the long-term data memory (16) again by means of the data analysis unit (17) and are analysed again.

19. Method according to one of Claims 15 to 18, wherein a superordinate system (12) connected to the first interface (11) uses one of the interfaces (11, 13) to recall data from the long-term data memory (16) by means of said superordinate system (12).

## Revendications

1. Dispositif comprenant une première interface (11) destinée à la connexion d'un système (12) de niveau supérieur au dispositif au moyen d'un premier protocole de données et comprenant une deuxième interface (13) destinée à la connexion d'un composant de système d'automatisation (14) au dispositif au moyen d'un deuxième protocole de données, un moyen d'acquisition de données (15a) et un moyen de transmission de données (15b) étant compris, lesquels sont respectivement reliés à au moins l'une des interfaces (11, 13) et sont reliés entre eux de telle sorte qu'un communication est réalisable entre les systèmes (12, 14) pouvant être connectés aux interfaces (11, 13), un moyen de conversion de données étant compris, lequel est configuré pour vérifier l'un après l'autre les protocoles des deux interfaces, le premier protocole de données étant égal au deuxième protocole de données ou étant différent du deuxième protocole de données, et le dispositif comprenant en plus :
a) une mémoire de données de longue durée (16) intégrée dans le dispositif pour la mémorisation de données brutes acquises à l'aide du moyen d'acquisition de données (15a), notamment de paramètres de fonctionnement d'un composant de système d'automatisation pouvant être connecté au dispositif ;
b) une unité d'analyse de données (17) intégrée dans le dispositif et destinée à analyser les données brutes stockées dans la mémoire de données de longue durée (16) en vue d'examiner les données journalisées conjointement au moyen de la deuxième interface à l'aide de l'unité d'analyse de données pendant ou après la mise en tampon et en dériver des connaissances concernant l'état du composant de système d'automatisation ;
c) un moyen de configuration (18) intégré dans le dispositif et destiné à la configuration de l'unité d'analyse de données (17) pour ce qui concerne l'analyse à effectuer et destiné à la configuration du dispositif pour ce qui concerne la nature du traitement postérieur du résultat de l'analyse de données au moyen de l'une des interfaces (11, 13) ou au moyen de la mémoire de données de longue durée (16).

2. Dispositif selon la revendication 1, l'unité d'analyse de données (17) comprenant au moins une unité fonctionnelle échangeable au moyen de laquelle peut être définie la fonction de l'unité d'analyse de données (17) et laquelle est gérée à l'aide du moyen de configuration (18) .

3. Dispositif selon l'une des revendications précédentes, le moyen d'acquisition de données (15a) disposant d'un accès direct à l'unité d'analyse de données (17).

4. Dispositif selon l'une des revendications précédentes, le moyen de transmission de données (15b) disposant d'un accès direct à la mémoire de données de longue durée (16).

5. Dispositif selon l'une des revendications précédentes, le dispositif lui-même pouvant être configuré à l'aide du moyen de configuration (18), notamment toutefois l'opération d'écriture au moyen de l'une des interfaces (11, 13) et/ou l'opération de lecture depuis l'une des interfaces (11, 13) et/ou l'initialisation du dispositif et/ou le déroulement d'opérations de mesure en utilisant au moins l'une des interfaces (11, 13).

6. Dispositif selon l'une des revendications précédentes, un dispositif de protection des données (19) étant compris, au moyen duquel peut être réalisée une sécurisation des données à transmettre au moyen d'un protocole de données et/ou au moyen duquel des droits d'accès peuvent être attribués à des composants individuels et/ou aux données stockées dans le dispositif.

7. Dispositif selon l'une des revendications précédentes, la première et/ou la deuxième interface (11, 13) fonctionnant au moyen de l'un des protocoles de données suivants :
a) Format standard Web-Service OPC ;
b) Format standard OPC-UA ;
c) Format standard bus de terrain ;
d) Protocole de données propriétaire.

8. Dispositif selon l'une des revendications précédentes, le dispositif étant réalisé sous la forme d'un serveur, lequel fait office d'interface normalisée entre un système (12) de niveau supérieur configuré en tant que client, notamment un système de supervision de fabrication (12), et un composant de système d'automatisation (14) et est notamment réalisé au moyen d'un ordinateur personnel qui est connecté au système (12) de niveau supérieur et au composant de système d'automatisation (14) au moyen de cartes d'interface matérielles.

9. Système d'entraînement comprenant un dispositif selon l'une des revendications précédentes intégré ou externe, le composant de système d'automatisation (14) étant un automate programmable industriel et/ou une commande numérique et/ou une commande de mouvement et/ou un mécanisme d'entraînement électrique.

10. Système d'usinage, notamment machine-outil, comprenant un dispositif selon l'une des revendications 1 à 8 intégré ou externe, le composant de système d'automatisation (14) connecté au moyen de la deuxième interface (13) faisant partie du système d'usinage.

11. Système de gestion de fabrication comprenant un dispositif selon l'une des revendications 1 à 8 intégré ou externe.

12. Système d'entraînement basé sur réseau comprenant un composant selon l'une des revendications précédentes.

13. Système de gestion de fabrication basé sur réseau comprenant un composant selon l'une des revendications précédentes.

14. Ligne de fabrication comprenant un composant selon l'une des revendications précédentes.

15. Procédé pour faire fonctionner un dispositif selon l'une des revendications 1 à 8, comprenant les étapes suivantes :
a) chargement automatique d'un paramètre de fonctionnement d'un composant de système d'automatisation (14) pouvant être connecté au dispositif au moyen de la deuxième interface (13) dans la mémoire de données de longue durée (16) ;
b) lecture automatique de la mémoire de données de longue durée et analyse des données en fonction d'une prescription d'analyse de données remplaçable au moyen de l'unité d'analyse de données (17) afin d'en dériver des connaissances concernant l'état du composant de système d'automatisation et préparation automatique du résultat de l'analyse pour le traitement postérieur du résultat ;
c) traitement postérieur automatique du résultat de l'analyse au moyen de la première interface (11) et/ou au moyen de la deuxième interface (13) et/ou au moyen de la mémoire de données de longue durée (16).

16. Procédé selon la revendication 15, le chargement automatique de données dans la mémoire de données de longue durée (16) s'effectuant en raison d'un événement externe qui a été reconnu par le dispositif et qui peut être configuré à l'aide du moyen de configuration (18).

17. Procédé selon l'une des revendications 15 et 16, des paramètres de fonctionnement d'un composant de système d'automatisation (14) raccordé au dispositif étant modifiés au moyen de la deuxième interface (13).

18. Procédé selon l'une des revendications 15 à 17, dans le cas de l'écriture des résultats d'analyse dans la mémoire de données de longue durée (16), ces résultats d'analyse étant une nouvelle fois lus depuis la mémoire de données de longue durée (16) au moyen de l'unité d'analyse (17) et une nouvelle fois analysés.

19. Procédé selon l'une des revendications 15 à 18, des données étant invoquées depuis la mémoire de données de longue durée (16) par un système (12) de niveau supérieur, raccordé à la première interface (11), au moyen de l'une des interfaces (11, 13) au moyen de ce système (12) de niveau supérieur.
